# EUROPEAN PATENT APPLICATION

(11) **EP 2 124 487 A1**
(43) Date of publication of application: **25.11.2009**
(21) Application number: 08757495.0
(22) Date of filing: 26.05.2008
(51) Int. Cl.: H04W 4/00

(54) **SERVICE PROCESSING METHOD AND PROCESSING SYSTEM AND SERVICE CONTROL POINT**

(30) Priority: 12.09.2007 CN 200710121671
(71) Applicant: Huawei Technologies Co., Ltd., Longgang District, Shenzhen Guangdong 518129 (CN)
(72) Inventor: HUI, Junrui, Guangdong 518129 (CN)
(74) Representative: Thun, Clemens
(86) International application number: PCT/CN2008/071076
(87) International publication number: WO 2009/033378

(57) **Abstract**

A service processing method, a service processing system, and a service control point (SCP) are provided. The service processing method includes the following steps. A processing request from a user is received. It is determined whether the user is a switched service user or not according to a user number of the user, if the user is not the switched service user, the processing request is processed locally, and if the user is not the switched service user, the processing request is forwarded to a home location of the user after switching the service for processing. In the present invention, it is determined whether a user who sends a service processing request has switched service or not, and if the user has switched the service, the request is forwarded to a home SCP and a processing device of the user after switching the service for processing. Thereby, the management process of the original service is maintained, and updates can be performed in real time with high efficiency and low operating cost.

## Description

### FIELD OF THE TECHNOLOGY

Aspects of the present invention relate to the field of mobile communications, and more particularly to a service processing method, a service processing system, and a service control point (SCP).

### BACKGROUND

With the development of the times, high requirements arise on differentiated services of mobile communications. Therefore, in practice, operators may run a plurality of service brands at the same time. As payment modes and service characteristics of respective services are different, their processing modes also differ from each other. In a prior method, service control points (SCPs) are classified according to services, such that one or more SCPs may process managing operation of a certain service. Meanwhile, user number segments are classified according to the services, and one service is corresponding to one or more number segments. Therefore, each number segment belongs to an SCP corresponding to its service, and the SCP processes services of all the numbers in the user number segment. Each SCP in an entire network stores data about corresponding relationships between random number segments and home SCPs thereof. The data of all the SCPs are the same.

The SCPs are usually interconnected by Execute operations of intelligent network application protocol (INAP) signaling, or by other negotiated protocols. When a user initiates a management request, the system accesses an SCP by the principle of proximity. The SCP first looks up a relationship table between number segments and home SCPs thereof for the home SCP of the user number, and then determines whether the user number belongs to the SCP or not. If the user number belongs to the SCP, a management process is performed according to processing logics on the SCP, and if the user number does not belong to the SCP, the SCP forwards the management request to the home SCP of the user number by Execute interconnection operations for processing.

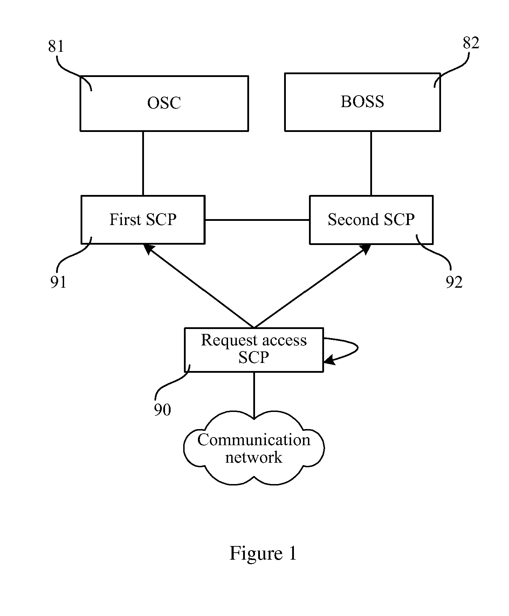

Figure 1 is a schematic view of a service processing method in the prior art. A first user number segment 135 belongs to a first SCP 91. A second user number segment 139 belongs to a second SCP 92. An access SCP 90 forwards a management request about the first user number segment 135 to the first SCP 91 according to corresponding relationships between the number segments and the home SCPs thereof, and then, the first SCP 91 interacts with an online charging system (OCS) 81 to complete the processing. Meanwhile, the access SCP 90 forwards a management request about the second user number segment 139 to the second SCP 92 for processing, and then, the second SCP 92 interacts with a business and operation support system (BOSS) 82 to complete the processing.

When a user switches from one service to another, one method is to unsubscribe a number of an original service, and select a number of a new service for subscription. Such processing is very complicated, and the user has to handle the services in person, which is rather inconvenient. Another method is to remain the number unchanged, and switch from one service to another. This method requires to update a corresponding relationship table between user number segments and home SCPs thereof on SCPs of the entire network for subsequent service processing.

In the conventional method, numbers applying for service switching are periodically collected (for example, once a month). According to the service applied for, the user numbers are together migrated from a charging system of the original service into a charging system of the service applied for. The home SCP corresponding to each user number is reassigned, and a table of corresponding relationships between the user numbers and home SCPs thereof on SCPs of the entire network is updated according to the new corresponding relationships. Thereby, the corresponding relationships between the user numbers and the home SCPs are modified according to the updated table of the corresponding relationships, and the service processing flow may be performed normally.

However, the method requires to periodically update data about the corresponding relationships on all the SCPs in the entire network, so the workload, the overhead for number storage, the operating cost, and the malfunction ratio are all high. Besides, as the corresponding relationships can be updated periodically instead of being updated in real time, the processing efficiency is low.

### SUMMARY

The aspects of the present invention provide a service processing method and a service processing system, so as to realize service switching in real time and at a low cost.

The aspects of the present invention provide a service processing method which includes:
receiving a processing request of a user; and
determining whether the user is a switched service user or not according to a user number of the user, if the user is not the switched service user, processing the processing request locally, and if the user is the switched service user, forwarding the processing request to a home location of the user after switching the service for processing.

The aspects of the present invention further provide a service processing system which includes:
a receiving module, adapted to receive a processing request of a user; and
a processing module, adapted to determine whether the user is a switched service user or not according to a user number of the user, if the user is not the switched service user, process the processing request locally, if the user is the switched service user, forward the processing request to a home location of the user after switching the service for processing.

The aspects of the present invention further provide a service control point (SCP) which includes:
a first determining module, adapted to determine whether a user is locally homed or not according to a received processing request of the user; and
a first sending module, adapted to send the processing request to a home SCP of the user when the user is not locally homed and forward the processing request to a local processing device when the user is locally homed, or forward the processing request to a home SCP of the user after switching the service.

The aspects of the present invention further provide a service processing system which includes:
a service control point (SCP), adapted to determine whether a user is locally homed or not according to a received processing request of the user, if the user is not locally homed, send the processing request to a home SCP of the user, and if the user is not locally homed, forward the processing request; and
a processing device, adapted to determine whether the user is a switched service user or not according to the received processing request, if the user is not the switched service user, process the processing request locally, and if the user is the switched service user, send the processing request of the user to a home SCP of the user after switching the service by the SCP, wherein the home SCP of the user after switching the service directly forwards the processing request to a processing device on the home location of the user after switching the service for processing.

Therefore, according to the service processing method, the service processing system, and the SCP provided in the aspects of the present invention, it is determined whether a user who sends a service processing request has switched service or not, and if the user has switched the service, the request is forwarded to a home SCP and a processing device of the user after switching the service belongs to for processing. Thereby, the management process of the original service is maintained, and data of the SCP does not require to be updated, so that service switching and processing may be realized in real time with high efficiency and low operating cost.

### BRIEF DESCRIPTION OF THE DRAWINGS

Figure 1 is a schematic view of a service processing method in the prior art;

Figure 2 is a flow chart of a service processing method according to an aspect of the present invention;

Figure 3 is a schematic structural view of a service processing system according to an aspect of the present invention;

Figure 4 is a schematic structural view of an SCP according to an aspect of the present invention; and

Figure 5 is a schematic structural view of another service processing system according to an aspect of the present invention.

### DETAILED DESCRIPTION

The technical solutions of the present invention are further described in detail below in the aspects with the accompanying drawings.

A service processing method provided in an aspect of the present invention includes the following steps.

A service control point (SCP) receives a processing request of a user.

The SCP determines whether the user is a switched service user or not according to a user number of the user, if the user is not the switched service user, processes the processing request locally" and if the user is the switched service user, forwards the processing request to a home location of the user after switching the service for processing.

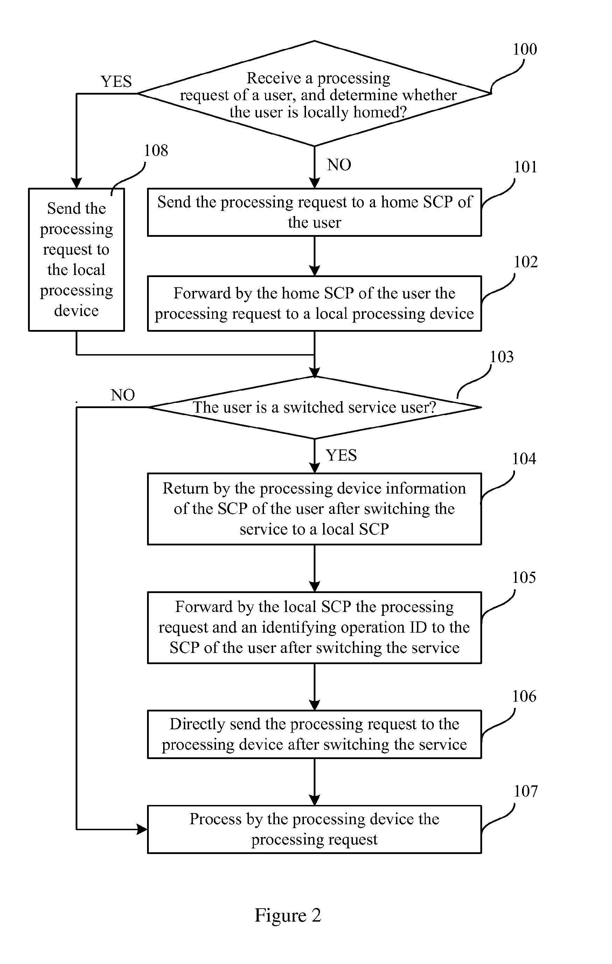

In addition, before determining whether the user is the switched service user or not according to the user number of the user, the method may further include a step that the SCP further determines whether the user is locally homed or not according to the user number of the user, and performs a corresponding process according to the determination result. Figure 2 is a flow chart of a service processing method according to an aspect of the present invention, which includes the following steps.

In Step 100, a local SCP receives a processing request from a user, and determines whether the user is locally homed or not according to a user number of the user. If the user is not locally homed, the process proceeds to Step 101; and if the user is locally homed, the process proceeds to Step 108.

The local SCP determines whether the user is locally homed or not according to corresponding relationships between the SCPs and user number segments. If a number segment that the user number of the user belongs to has a corresponding relationship with the local SCP, it is determined that the user is locally homed; and if the number segment does not have the corresponding relationship with the local SCP, it is determined that the user is not locally homed. The processing request may be, but not limited to, a recharge and payment request, an account information query request, or a missing claim/disclaim request. The processing request may come from a network, but not necessarily from a switch or a website.

In Step 101, the local SCP sends the processing request to a home SCP of the user.

No matter whether the user has switched service or not, the SCP maintains the same corresponding relationships between the SCPs and the user number segments. Thus, the processing request is sent to a home SCP corresponding to the number segment that the user number belongs to.

One SCP is in charge of one type of services, and one type of services is corresponding to one or more user number segments. Therefore, the service type can be obtained from the user number segment of the user, and the user number segments of the same type of services are corresponding to the SCP that is in charge of the services.

In Step 102, the home SCP of the user sends the processing request to a local processing device.

In Step 103, the local processing device determines whether the user is a switched service user or not, if the user is not the switched service user, the process proceeds to Step 107; and if the user is the switched service user, the process proceeds to Step 104.

The local processing device may be, but not limited to, a charging processing system, for example, an online charging system (OCS) or a business and operation support system (BOSS). Such processing devices all have a storage adapted to store information of the users corresponding to the local SCP who switch service, and corresponding information of the SCP in charge of the users after switching the service. For example, if one user subscribes to service a, and an SCP in charge of the service a is SCPa, it is assumed that the user requires to switch to service b, and an SCP in charge of the service b is SCPb. After the user switches from the service a to the service b, a corresponding relationship with the user is not required to be stored in the SCPb, and related information of the SCPb is required to be stored in the SCPa. That is to say, although the service has been switched, information of the switched service user is stored in the storage of the processing device before switching the service. Therefore, it is unnecessary for each SCP in the entire network to update information of the switched service user. Table 1 is an information storage table in the storage. The user information includes, but not limited to, a user number, a home SCP of a user after switching the service, time of switching the service by the user, and the like.

When the user is switching services, a home processing device before switching the service records and saves information of the user after switches the service in the storage. The local processing device determines whether the user sending the processing request has switched the service or not according to the stored information of the users after switching the service. That is, related information of whether the user has switched the service and whether an SCP of the user after switching the service exists or not is found in the storage.

**Table 1 Information Storage Table in Storage**

| User Number | Home SCP after Switching Service | Time of Switching Service | ... ... |
|---|---|---|---|
| 13570880010 | SCP 102 | 2007-01-01 12:03:05 | ... ... |
| 13590416701 | SCP 101 | 2007-01-0112:31:33 | ... ... |
| 13554552584 | SCP 101 | 2007-01-0113:01:59 | ... ... |
| ... ... | ... ... | ... ... | ... ... |
| ... ... | ... ... | ... ... | ... ... |

In Step 104, the local processing device returns information of the SCP of the user after switching the service to the local SCP.

As the processing device stores information of the SCPs of the users corresponding to the local SCP who switch service, when it is found that the user has switched service, information of the home SCP of the user after switching the service is sent to the local SCP, but the present invention is not limited thereto.

In Step 105, the local SCP forwards the processing request together with an identifying operation ID to the SCP of the user after switching the service.

The identifying operation ID conveys operation information of interconnection between expanded SCPs, and is a special operation ID. The operation ID indicates that the user has switched the service, so as to distinguish a normal operation of forwarding a processing request to the home SCP of the user. The operation ID and the currently used operation ID do not conflict with each other. For example, an operation ID 99999 is newly added. After the SCP receives an interconnection operation from other SCPs, it is first determined whether the operation ID exists or not, and if the operation ID exists, it is further determined that the processing request of the switched service user is forwarded from other SCPs, so that the processing request is directly sent to a processing device after switching the service for processing.

In Step 106, the SCP of the user after switching the service determines that the received processing request is a processing request forwarded after switching the service according to the identifying operation ID, and the processing request is directly sent to the processing device after switching the service for processing.

In Step 107, the processing device after switching the service processes the processing request.

That is, the processing request is processed in an existing manner, and the process is ended.

In Step 108, the local SCP sends the processing request to the local processing device, and the process proceeds to Step 103.

In an aspect of the present invention, a service processing system including a receiving module and a processing module is provided. The receiving module is adapted to receive a processing request of a user. The processing module is adapted to determine whether the user is a switched service user or not according to a user number of the user, if the user is not the switched service user, process the processing request locally, and if the user is the switched service user, forward the processing request to a home location of the user after switching the service for processing.

Based on the above technical solutions of the service processing system according to the aspects of the present invention, the processing module is further adapted to determine whether the user is locally homed or not according to the user number of the user before determining whether the user is the switched the service user or not according to the user number of the user, and if the user is not locally homed, the processing module sends the processing request to a home location of the user. Therefore, in the service processing method and the service processing system according to the aspects of present invention, after the user switches the service, data of the corresponding relationships between the user number segments and the home SCPs does not require to be largely modified, and related information of the user after switching the service is required to be stored in the processing device on the home location of the user before switching the service. After the processing device determines that the user has switched the service, the processing request is forwarded to the home SCP and the processing device of the user after switching the service for processing. Thereby, the management process of the original service is maintained, and updates can be performed in real time with high efficiency and low operating cost.

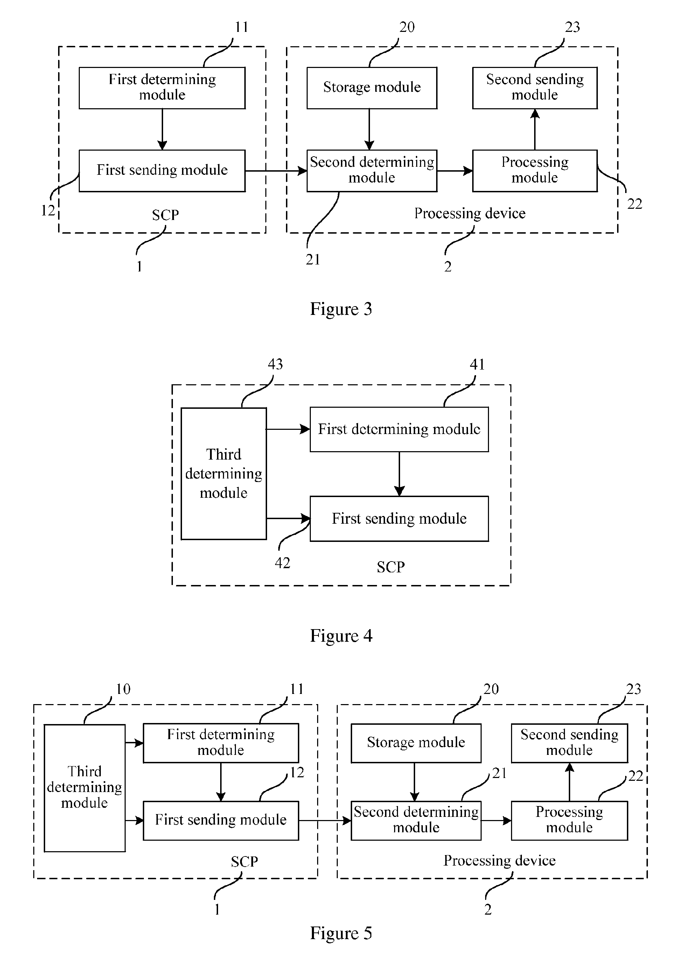

Figure 3 is a schematic structural view of a service processing system according to an aspect of the present invention. The service processing system includes an SCP 1 and a processing device 2. The SCP is adapted to determine whether a user is locally homed or not according to a received processing request from a user, if the user is not locally homed, send the processing request to a home SCP of the user, and if the user is locally homed otherwise, forward the processing request to the processing device 2. The processing device 2 is adapted to determine whether the user is a switched service user or not according to the received processing request, if the user is not the switched service user, process the processing request locally, and if the user is the switched service user , forward the processing request of the user to a home SCP of the user after switching the service by the SCP 1. The home SCP of the user after switching the service directly forwards the processing request to a processing device on the home location of the user after switching the service for processing.

Further, as shown in Figure 3, the SCP 1 includes a first determining module 11 and a first sending module 12. The first determining module 11 is adapted to determine whether the user is locally homed or not according to the received processing request of the user. The first sending module 12 is adapted to send the processing request to the home SCP of the user when the user is not locally homed and forward the processing request to a local processing device when the user is locally homed, or forward the processing request to a home SCP of the user after switching the service.

The determining module 11 determines whether the user is a local user or not through corresponding relationships between the SCPs and user number segments. As data about the corresponding relationships maintained in the entire network is the same, if a number segment that the user number of the user belongs to has a corresponding relationship with the local SCP, it is determined that the user is locally homed; and if the number segment does not have the corresponding relationship with the local SCP, it is determined that the user is not locally homed. No matter whether the user has switched the service or not, the corresponding relationships between the SCPs and the user number segments maintained by the SCP stay the same, and the first sending module 12 sends the processing request to a home SCP corresponding to the number segment that the user number belongs to. The processing request may be, but not limited to, a recharge and payment request, an account information query request, or a missing claim/disclaim request. The request may come from a network, but not necessarily from a switch or a website.

Further, referring to Figure 3, the processing device 2 includes a storage module 20, a second determining module 21, a processing module 22, and a second sending module 23. The storage module 20 is adapted to store information of the switched service user and the SCP of the user after switching the service, and a corresponding homing relationship between the switched service user and the SCP of the user after switching the service. The second determining module 21 is adapted to determine whether the user is the switched service user or not according to the received processing request and the corresponding homing relationship between the switched service user and the SCP of the user after switching the service stored in the storage module20. The processing module 22 is adapted to process a processing request of a user before switching the service. The second sending module 23 is adapted to send information of the switched service user and the SCP of the user after switching the service to a local SCP 1.

The processing device 2 may be, but not limited to, a charging processing system, for example, an OCS or a BOSS. Such processing devices all adopt the storage module 20 to store information of the user after switching the service corresponding to the local SCP, and related information of the SCP of the user after switching the service. That is to say, although the service has been switched, information of the user after switching the service is stored in the storage of the processing device before switching the service. Therefore, it is unnecessary for each SCP in the entire network to update information of the user after switching the service. The user information includes, but not limited to, a user number, a home SCP of a user after switching the service, time of switching the service by the user, and the like. When the service of the user is switched, the processing device records and saves information of the user after switching the service in the storage device. After receiving the processing request, the second determining module 21 determines whether the user is the switched service user or not according to the received processing request and the information of the switched service user stored in the storage module 20. If the user is the switched service user, the second sending module 23 sends information of the user after switching the service and the SCP of the user after switching the service to the local SCP 1.

Figure 4 is a schematic structural view of an SCP according to an aspect of the present invention. The SCP includes a first determining module 41 and a first sending module 42. The first determining module 41 is adapted to determine whether a user is locally homed or not according to a processing request received of the user. The first sending module 42 is adapted to send the processing request to a home SCP of the user when the user is not locally homed and forward the processing request to a local processing device when the user is locally homed, or forward the processing request to an SCP of the user after switching the service.

As shown in Figure 4, the SCP further includes a third determining module 43. The third determining module is adapted to determine whether the received processing request for switching the service of the user is forwarded from other SCPs or not, if the processing request is forwarded from the other SCPs, directly send the processing request to the local processing device by the first sending module for processing, and if the processing request is not forwarded from the other SCPs, forward the processing request to the first determining module 41.

Figure 5 is a schematic structural view of another service processing system according to an aspect of the present invention. On the basis of the previous aspect, in this aspect, a third determining module 10 is added to the SCP 1. The third determining module 10 is adapted to determine whether a processing request for switching the service is forwarded from other SCPs or not, if the processing request for switching the service is forwarded from other SCPs, directly send the processing request to the local processing device 2 by the first sending module 12 for processing, and if the processing request for switching the service is not forwarded from other SCPs, forward the processing request to the first determining module 11.

Moreover, when forwarding the processing request to an SCP of the user after switching the service, the first sending module 12 further sends an identifying operation ID at the same time. Therefore, the third determining module 10 determines whether the processing request for switching the service is forwarded from other SCPs or not according to the identifying operation ID. The identifying operation ID conveys operation information about interconnection between expanded SCPs, and is a special operation ID. The operation ID indicates that the user has switched the service. The operation ID and the currently used operation ID do not conflict with each other. For example, an operation ID 99999 is newly added. After the SCP receives an interconnection operation from other SCPs, the third determining module 10 first determines whether the operation ID exists or not, and if the operation ID exists, further determines that the processing request of the switched service user is forwarded from other SCPs, so that the third determining module 10 directly sends the processing request to the processing device after switching the service for processing.

Therefore, in the service processing system according to the aspect of the present invention, after the service of the user is switched, data about the corresponding relationships between the user number segments and the home SCPs does not require to be largely modified, and related information of the user after switching the service is required to be stored in the processing device on the home location of the user before switching the service. After the processing device determines that the user has switched the service, the processing request is forwarded to the SCP and the processing device of the user after switching the service for processing. Thereby, the management process of the original service is maintained, and updates can be performed in real time with high efficiency and low operating cost.

Finally, it should be noted that, though the technical solutions of the present invention have been disclosed above by the aspects, they are not intended to limit the invention. Those of ordinary skill in the art can make modifications or equivalent substitutions to the technical solutions of the present invention without departing from the spirit and scope of the same.

## Claims

1. A service processing method, comprising:
receiving a processing request of a user; and
determining whether the user is a switched service user or not according to a user number of the user, if the user is not the switched service user, processing the processing request locally, and if the user is the switched service user forwarding the processing request to a home location of the user after switching the service for processing

2. The service processing method according to claim 1, wherein before determining whether the user is the switched service user or not according to the user number of the user, the method further comprises:
determining whether the user is locally homed or not according to the user number of the user, and if the user is not locally homed, sending the processing request to a home location of the user.

3. The service processing method according to claim 1, further comprising:
sending an identifying operation ID to the home location of the user after switching the service, wherein the home location of the user after switching the service directly processes the processing request according to the identifying operation ID.

4. A service processing system, comprising:
a receiving module, adapted to receive a processing request of a user; and
a processing module, adapted to determine whether the user is a switched service user or not according to a user number of the user, if the user is not the switched service user, process the processing request locally, and if the user is the switched service user forward the processing request to a home location of the user after switching the service for processing.

5. The service processing system according to claim 4, wherein the processing module is further adapted to, before determining whether the user is the switched service user or not according to the user number of the user, determine whether the user is locally homed or not according to the user number of the user, and if the user is not locally homed, send the processing request to the home location of the user.

6. A service control point, SCP, comprising:
a first determining module, adapted to determine whether a user is locally homed or not according to a received processing request of the user; and
a first sending module, adapted to send the processing request to an SCP on a home location of the user when the user is not locally homed and forward the processing request to a local processing device when the user is locally homed, or forward the processing request to a home SCP of the user after switching the service.

7. The SCP according to claim 6, wherein the SCP further comprises:
a third determining module, adapted to determine whether the processing request for switching the service is forwarded from other SCPs or not, if the processing request is forwarded from the other SCPs, directly send the processing request by the first sending module to local for locally processing, and if the processing request is forwarded from the other SCPs, forward the processing request to the first determining module.

8. A service processing system, comprising:
a service control point, SCP, adapted to determine whether a user is locally homed or not according to a received processing request of the user, if the user is not locally homed, send the processing request to a home SCP, and if the user is locally homed, forward the processing request; and
a processing device, adapted to determine whether the user is a switched service user or not according to the received processing request, if the user is not the switched service user, process the processing request locally, and if the user is the switched service user, send the processing request of the user to a home SCP of the user after switching the service by the SCP, wherein the home SCP of the user after switching the service directly forwards the processing request to a processing device on the home location of the user after switching the service for processing.

9. The service processing system according to claim 8, wherein the SCP comprises:
a first determining module, adapted to determine whether the user is locally homed or not according to the received processing request of the user; and
a first sending module, adapted to send the processing request to the home SCP when the user is not locally homed and forward the processing request to a local processing device when the user is locally homed, or forward the processing request to the home SCP of the user after switching the service.

10. The service processing system according to claim 9, wherein the processing device comprises:
a storage module, adapted to store information of the users who have switched the service and the SCP of the users after switching the service, and a corresponding homing relationship between the user who has switched the service and the SCP of the user after switching the service;
a second determining module, adapted to determine whether the user is the switched service user or not according to the received processing request and the corresponding homing relationship between the switched service user and the SCP of the user after switching the service stored in the storage module;
a processing module, adapted to process a processing request of a user who does not switch the service; and
a second sending module, adapted to send information of the switched service user and the SCP of the user after switching the service to a local SCP.

11. The service processing system according to claim 9 or 10, wherein the SCP further comprises:
a third determining module, adapted to determine whether the processing request for switching the service is forwarded from other SCPs or not, if the processing request is forwarded from the other SCPs, directly send the processing request to the local processing device by the first sending module for processing, and if the processing request is not forwarded from the other SCPs, forward the processing request to the first determining module.

12. The service processing system according to claim 11, wherein the first sending module of the SCP sends an identifying operation ID at the same time when forwarding the processing request to the SCP of the user after switching the service.

13. The service processing system according to claim 11, wherein the third determining module of the SCP determines whether the processing request for switching the service is forwarded from other SCPs or not according to the identifying operation ID.
